# EUROPEAN PATENT APPLICATION

(11) **EP 1 965 122 A1**
(43) Date of publication of application: **03.09.2008**
(21) Application number: 08356005.2
(22) Date of filing: 15.01.2008
(51) Int. Cl.: F21K 7/00, H01L 27/15, H01L 33/00

(54) **High power light emitting diode (LED) illumination apparatus**

(30) Priority: 06.02.2007 CN 200710037225
(71) Applicant: Ningbo Andy Optoelectronic Co., Ltd., China 3154000 (CN)
(72) Inventor: Lou, Hong-xian, Zhejiang China 3154000 (CN); Liu, Xue-yong Room 1-402,, Zhejiang China 3154000 (CN)
(74) Representative: Jeannet, Olivier

(57) **Abstract**

A high power LED illumination apparatus (8) is disclosed. The high power LED illumination apparatus (8) includes a frame body (1), a plurality of LEDs, a plurality of lens devices having a plurality of first light-reflecting units, and a second light-reflecting unit (4). The LEDs are positioned within the frame body (1) and electrically connected to a power source. The lens devices are positioned to the LEDs correspondingly, wherein each of the lens devices has a lens and a lens holder, the lens holder has a first light-reflecting unit, and the lens devices are positioned on a plurality of top portions of the LEDs, respectively. The second light-reflecting unit (4) is configured for the LEDs. A plurality of first surface profiles of the first light-reflecting units and a second surface profile of the second light-reflecting unit (4) have a plurality of undulated and diffusing reflection regions, respectively.

## Description

### Field of the Invention

The present invention relates to a light emitting diode (hereinafter abbreviated as LED) illumination apparatus, and more particularly to a high power LED illumination apparatus designed to increase illumination efficiency.

### Background of the Invention

LED has the features of better environmental protection, less power consumption, and long life-span, making it a suitable illumination light source in the 21 st century. Since the technology maturity of the LED is increased, the high power LED is thus developed and the high power LED put on the market for sale. Currently, the LED illumination apparatus, employing a high power LED as a light source, becomes available in the market continually. However, to a considerable extent, the light emission uniformity of the illumination apparatus is considerably affected by the light-illuminating direction of the LED. Conventionally, a ring or dark spot is formed on the illumination apparatus, thereby not meeting the illumination requirement and limiting the application fields, e.g. roadway lighting, outdoor advertising billboards, of the LED illumination apparatus.

### Summary of the Invention

One objective of the present invention is to provide a high power LED illumination apparatus for increasing the illumination efficiency to solve the problem of the ring or dark spot formed on the conventional illumination apparatus.

The high power LED illumination apparatus in the present invention includes a frame body, a plurality of LEDs, a plurality of lens devices having a plurality of first light-reflecting units, respectively, and a second light-reflecting unit. The LEDs are positioned within the frame body and electrically connected to a power source. The lens devices are positioned to the LEDs correspondingly, wherein each of the lens devices has a lens and a lens holder, the lens holder has a first light-reflecting unit, and the lens devices are positioned on a plurality of top portions of the LEDs, respectively. The second light-reflecting unit is configured for the LEDs. A plurality of first surface profiles of the first light-reflecting units and a second surface profile of the second light-reflecting unit have a plurality of undulated and diffusing reflection regions, respectively.

The undulated and diffusing reflection regions of the first light-reflecting units and the second light-reflecting unit are selected from one group consisting of a plurality of regular or irregular pits, protrusions, ripples, and/or the combinations thereof.

The internal surfaces of the undulated and diffusing reflection surface profiles of the first light-reflecting units are selected from one group consisting of a plurality of regular or irregular pits, protrusions, ripples, and the combinations. Further, the one group consisting of the regular or irregular pits, protrusions, ripples, and the combinations generates a frosted layer.

The first surface profiles of the first light-reflecting units and the second surface profile of the second light-reflecting unit further comprise a plurality of light reflection layers, respectively.

The undulated and diffusing reflection regions of the first light-reflecting units are parabolic curved surface profiles, and a plurality of openings are formed in the lower central position of the first light-reflecting units, respectively.

The high power LED illumination apparatus further includes a plurality of lens holding portions, wherein each lens holding portion has an annular flat region and a supporting sidewall, the annular flat region is positioned on one of the first light-reflecting units, and the supporting sidewall outwardly surrounds the annular flat region and upwardly extends from the annular flat region.

The LEDs within the frame body are positioned in the form of one convex curved surface portion along the light emission direction of the LEDs.

A first bottom wall of the frame body further includes a cambered base unit, and the LEDs on a circuit board are positioned on the cambered base unit by adjoining the circuit board to the cambered base unit so that the LEDs form the convex curved surface portion along the surface of the cambered base unit.

At least one of the two mutual perpendicular cross-sections of the cambered base unit has an outward convex shape.

The second light-reflecting unit includes a second bottom wall having another convex curved surface portion, and the LEDs pass through a plurality of holes positioned in the second bottom wall.

The second light-reflecting unit further includes four sidewalls outwardly extending from the second bottom wall, respectively.

The second light-reflecting unit supports the lens devices and the LEDs corresponding to the lens devices.

In comparison with the conventional illumination apparatus, the high power LED illumination apparatus improves the lens holder. In one embodiment of the present invention, the surface profiles of the first light-reflecting units of the lens holders are the undulated and diffusing reflection surface profiles. In another embodiment, the high power LED illumination apparatus further includes a second light-reflecting unit. The surface profiles of the first light-reflecting unit and the internal wall of the second light-reflecting unit include the undulated and diffusing reflection surface profiles, respectively. Thus, the light emitted from the high power LED is optically processed by the lens first. Then, the processed light passes through the first light-reflecting unit and second light-reflecting unit, respectively, for processing the light further so that the light from the high power LED is highly uniform light, thereby cancelling the ring or dark spot formed on the conventional illumination apparatus for improving the illumination efficiency.

### Brief Description of the Drawings

The foregoing aspects and many of the attendant advantages of this invention will become more readily appreciated as the same becomes better understood by reference to the following detailed description, when taken in conjunction with the accompanying drawings, wherein:
FIG. 1 is an exploded three-dimensional view of the high power LED illumination apparatus according to one embodiment of the present invention;
FIG. 2 is an exploded three-dimensional view of the LED lens device of the high power LED illumination apparatus according to one embodiment of the present invention; and
FIG. 3 is a three-dimensional view of the light-reflecting unit of the high power LED illumination apparatus according to one embodiment of the present invention.

### Detailed Description of the Invention

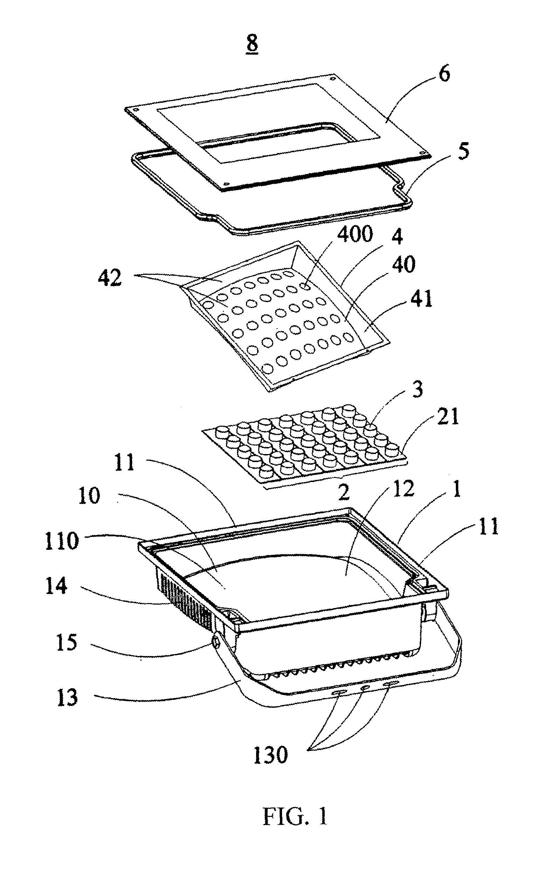

Please refer to FIG. 1 which depicts an exploded three-dimensional view of the high power LED illumination apparatus 8 according to one embodiment of the present invention. The high power LED illumination apparatus 8 includes a frame body 1, a circuit board 2, a plurality of LED and lens devices 3, a second light-reflecting unit 4 configured for the LEDs, a sealing ring 5, a light-outputting plate 6 and a power source (not shown). The LED and lens devices 3 are positioned within the frame body 1 and electrically connected to the power source. The light-outputting plate 6 is fastened on the frame body 1 and seals the LED and lens devices 3 into the frame body 1. The LEDs (not shown) within the frame body 1 face the light-outputting plate 6 and form a convex curved surface portion outwardly along the light emission direction of the LEDs. The convex surface preferably has a central angle range from ten degrees to one hundred degrees.

The material of the frame body 1 includes the material, e.g. aluminum, having good heat conductivity for transmitting heat produced by the high power LED illumination apparatus 8. The frame body 1 has a first bottom wall 10, four side walls 11 and a containing space 12 enclosed by the first bottom wall 10 and the four side walls 11. The central region of the first bottom wall 10 outwardly protrudes to form a cambered base unit 110 for holding the circuit board 2. The LEDs on a circuit board are positioned on the cambered base unit by adjoining the circuit board to the cambered base unit so that the LEDs form the convex curved surface portion along the surface of the cambered base unit. The two mutual perpendicular cross-sections of the cambered base unit 110 preferably have outward convex shapes. It is noted that the radii of the outward convex shapes can be designed to be different required sizes. The cambered base unit 110 also can be designed as other shapes. For example, one cross-section of the cambered base unit 110, facing outwardly to the light-outputting plate 6, is designed as an outward convex shape, and the other cross-section perpendicular to the one cross-section of the cambered base unit 110 is designed as a straight line shape. In addition, the frame body 1 further includes a supporting device 13 and a plurality of heat sinks 14. The supporting device 13 supports the frame body 1 for sustaining the frame body 1. For example, by connecting the screws 15 to the frame body 1, the supporting device 13 further includes a plurality of position holes 130 so that the high power LED illumination apparatus 8 is fixed to a target object when the screws 15 are screwed into the position holes 130.

The circuit board 2 is preferably a flexible printed circuit board with good heat conductivity. The circuit board 2 includes a plurality of stripped circuit plates 21 which installed with the LED and lens devices 3. The amount and the intervals of the LEDs can be designed based on the desired requirement. In one embodiment, the LEDs are in serial connections, in parallel connections or the combination of the serial and parallel connections. In one preferred embodiment, the LEDs in each stripped circuit plate 21 are in the serial connections, and the serial stripped circuit plates 21 are then in parallel connections to the adjacent stripped circuit plates 21, respectively. In another embodiment, the circuit board 2 includes a whole piece of printed circuit board or a plurality of small printed circuit boards. The LED and lens device 3 may be a light-condensing device, e.g. a condenser cup.

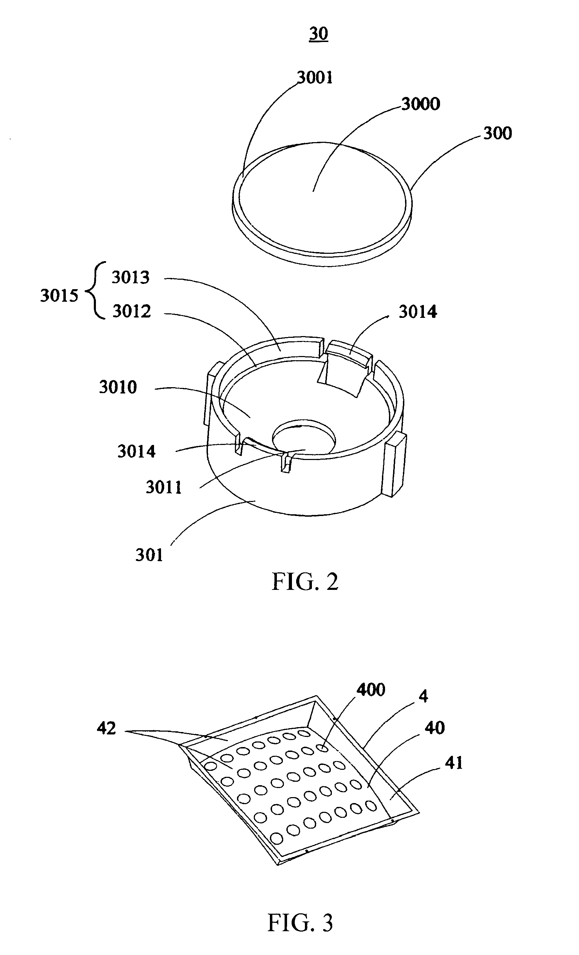

Please refer to FIG. 2 which depicts an exploded three-dimensional view of the LED lens device of the high power LED illumination apparatus according to one embodiment of the present invention. Each of the LED and lens devices 3 includes a LED and a lens device 30 corresponding to the LED. The lens device 30 focuses the light from the LED to concentrate the light. The lens device 30 includes a lens 300 and a lens holder 301 for holding the lens 300. The lens 300 includes a lens body 3000 and a buckling unit 3001, and the lens holder 301 has a first light-reflecting unit 3010. In one embodiment, the first surface profile of the first light-reflecting unit 3010 is paraboloid, i.e. a parabolic curved surface profile. In another embodiment, the first surface profile of the first light-reflecting unit 3010 is an undulated and diffusing reflection region. In one case, the undulated and diffusing reflection region includes a variety of regular or irregular small pits, protrusions, ripples and the combinations thereof are formed on the internal surface of the first light-reflecting unit 3010. Further, a frosted layer (not shown) is generated by the group consisting of the regular or irregular pits, protrusions, ripples, and the combinations. In addition, the first surface profile of the first light-reflecting unit 3010 further includes a light reflection layer. An opening 3011 is formed in the lower central position of the first light-reflecting unit 3010 so that the LED passes through the opening 3011. An annular flat region 3012 is formed on the top portion of the first light-reflecting unit 3010. A supporting sidewall 3013 outwardly surrounds the annular flat region 3012 and upwardly extends from the annular flat region 3012. The annular flat region 3012 and supporting sidewall 3013 are combined as a lens holding portion 3015. A plurality of locking portions 3014 are formed on the supporting sidewall 3013 for locking the lens 300. When the lens 300 is fastened to the lens holder 301, the bottom region of the buckling unit 3001 is held on the lens holding portion 3015. The top region of the buckling unit 3001 is locked to the locking portions 3014.

Please refer to FIGs. 1-3. FIG. 3 depicts a three-dimensional view of the light-reflecting unit of the high power LED illumination apparatus according to one embodiment of the present invention. The second light-reflecting unit 4 has a second bottom wall 40 which is a convex curved surface portion outwardly, and the second light-reflecting unit 4 further has four sidewalls 41 outwardly extending from the second bottom wall 40. The second bottom wall 40 having the convex curved surface portion includes a plurality of holes 400. The LEDs pass through the holes 400 positioned in the second bottom wall 40. The internal wall 42, including the second bottom wall 40 and the four sidewalls 41, further has a light reflection layer. The internal wall 42, i.e. second surface profile, of the second light-reflecting unit 4 has an undulated and diffusing reflection region. For example, the undulated and diffusing reflection region is a variety of regular or irregular small pits, protrusions, ripples (not shown), and/or the combination are formed on the internal wall 42. The second light-reflecting unit 4 supports the lens devices 30 and LEDs corresponding to the lens devices 30.

The light-outputting plate 6 is a light-penetrated plate, such as a focusing lens, a divergent lens, or a sheet glass.

When the high power LED illumination apparatus is assembled, the LED and lens devices 3 are fixed on the circuit board 2. The circuit board 2 is then fasten on the cambered base unit 110 so that the LED and lens devices 3 are positioned within the frame body 1 in the form of a convex curved surface portion. Thereafter, the second light-reflecting unit 4 is positioned within the frame body 1 so that the second bottom wall 40, having a convex curved surface portion , of the second light-reflecting unit 4 is fitted for the cambered base unit 110. Further, the LED and lens devices 3 pass through the holes 400 of the second bottom wall 40 having the convex curved surface portion. Finally, the light-outputting plate 6 is positioned within the frame body 1 by turning the screws to the frame body 1 such that the circuit board 2, the LED and lens devices 3, and the second light-reflecting unit 4 are sealed in the frame body 1. For the purpose of waterproof, a sealing ring 5 is positioned between the light-outputting plate 6 and frame body 1.

The high power LED illumination apparatus 8 improves the lens holder 301. In one embodiment of the present invention, the surface profiles of the first light-reflecting units 3010 of the lens holders 301 are the undulated and diffusing reflection surface profiles. In another embodiment, the high power LED illumination apparatus 8 further includes a second light-reflecting unit 4. The surface profiles of the first light-reflecting unit 3010 and the internal wall 42 of the second light-reflecting unit 4 include undulated and diffusing reflection surface profiles, respectively. Thus, the light emitted from the high power LED is optically processed by the lens 300 first. Then, the processed light passes through the first light-reflecting unit 3010 and second light-reflecting unit 4, respectively, for processing the light further so that the light from the high power LED is highly uniform light, thereby cancelling the ring or dark spot formed on the conventional illumination apparatus for improving the illumination efficiency.

As is understood by a person skilled in the art, the foregoing preferred embodiments of the present invention are illustrative rather than limiting of the present invention. It is intended that they cover various modifications and similar arrangements be included within the spirit and scope of the appended claims, the scope of which should be accorded the broadest interpretation so as to encompass all such modifications and similar structure.

## Claims

1. A high power light emitting diode (LED) illumination apparatus (8), the apparatus (8) comprising:
a frame body (1);
a plurality of light emitting diodes (LEDs), positioned within the frame body (1) and electrically connected to a power source;
a plurality of lens devices (30) positioned to the light emitting diodes (LEDs) correspondingly, wherein each of the lens devices (30) has a lens (300) and a lens holder (301), the lens holder (301) has a first light-reflecting unit (3010), and the lens devices (30) are positioned on a plurality of top portions of the light emitting diodes (LEDs), respectively; and
a second light-reflecting unit (4), configured for the light emitting diodes (LEDs);
wherein a plurality of first surface profiles of the first light-reflecting units (3010) and a second surface profile of the second light-reflecting unit (4) have a plurality of undulated and diffusing reflection regions, respectively.

2. The high power light emitting diode (LED) illumination apparatus (8) of claim 1, wherein the undulated and diffusing reflection regions of the first light-reflecting units (3010) and the second light-reflecting unit (4) are selected from one group consisting of a plurality of regular or irregular pits, protrusions, ripples, and the combinations.

3. The high power light emitting diode (LED) illumination apparatus (8) of claim 2, wherein a plurality of internal surfaces of the undulated and diffusing reflection surface profiles of the first light-reflecting units (3010) are selected from one group consisting of a plurality of regular or irregular pits, protrusions, ripples, and the combinations, and the one group consisting of the regular or irregular pits, protrusions, ripples, and the combinations generates a frosted layer.

4. The high power light emitting diode (LED) illumination apparatus (8) of claim 1, wherein the first surface profiles of the first light-reflecting units (3010) and the second surface profile of the second light-reflecting unit (4) further comprise a plurality of light reflection layers, respectively.

5. The high power light emitting diode (LED) illumination apparatus (8) of claim 1, wherein the undulated and diffusing reflection regions of the first light-reflecting units (3010) are parabolic curved surface profiles, and a plurality of openings (3011) are formed in the lower central position of the first light-reflecting units (3010), respectively.

6. The high power light emitting diode (LED) illumination apparatus (8) of claim 1, further comprising a plurality of lens holding portions (3015), wherein each lens holding portion (3015) has an annular flat region (3012) and a supporting sidewall (3013), the annular flat region (3012) is positioned on one of the first light-reflecting units (3010), and the supporting sidewall (3013) outwardly surrounds the annular flat region (3012) and upwardly extends from the annular flat region (3012).

7. The high power light emitting diode (LED) illumination apparatus (8) of claim 1, wherein the light emitting diodes (LEDs) within the frame body (1) are positioned in the form of a convex curved surface portion along the light emission direction of the light emitting diodes (LEDs).

8. The high power light emitting diode (LED) illumination apparatus (8) of claim 7, wherein a first bottom wall (10) of the frame body (1) further comprises a cambered base unit (110), and the light emitting diodes (LEDs) on a circuit board (2) are positioned on the cambered base unit (110) by adjoining the circuit board (2) to the cambered base unit (110) so that the light emitting diodes (LEDs) form the convex curved surface portion along the surface of the cambered base unit (110).

9. The high power light emitting diode (LED) illumination apparatus (8) of claim 7, wherein at least one of the two mutual perpendicular cross-sections of the cambered base unit (110) has an outward convex shape.

10. The high power light emitting diode (LED) illumination apparatus (8) of claim 7, wherein the second light-reflecting unit (4) comprises a second bottom wall (40) having another convex curved surface portion, and the light emitting diodes (LEDs) pass through a plurality of holes (400) positioned in the second bottom wall (40).

11. The high power light emitting diode (LED) illumination apparatus (8) of claim 10, wherein the second light-reflecting unit (4) further comprises four sidewalls (11) outwardly extending from the second bottom wall (40), respectively.

12. The high power light emitting diode (LED) illumination apparatus (8) of claim 1, wherein the second light-reflecting unit (4) supports the lens devices (30) and the light emitting diodes (LEDs) corresponding to the lens devices (30).
